# EUROPÄISCHE PATENTSCHRIFT

(11) **EP 2 846 903 B1**
(45) Veröffentlichungstag und Bekanntmachung des Hinweises auf die Patenterteilung: **19.10.2016**
(21) Anmeldenummer: 13721311.2
(22) Anmeldetag: 26.04.2013
(51) Int. Cl.: B01F 7/04, B01F 15/06, C08F 2/01, G05D 15/00

(54) **VERFAHREN ZUM BETRIEB EINES MISCHKNETERS**
METHOD FOR OPERATING A KNEADER MIXER
PROCÉDÉ POUR FAIRE FONCTIONNER UN MÉLANGEUR-MALAXEUR

(30) Priorität: 07.05.2012 US 201261643384 P
(43) Veröffentlichungstag der Anmeldung: 18.03.2015
(73) Patentinhaber: BASF SE, 67056 Ludwigshafen am Rhein (DE)
(72) Erfinder: STEPHAN, Oskar, 68766 Hockenheim (DE); PETERSON, Monte, Perland, Texas 77584 (US); POSSEMIERS, Karl J., B-2970 Schilde (BE); LIPPENS, Steven, B-9140 Temse (BE)
(86) Internationale Anmeldenummer: PCT/EP2013/058734
(87) Internationale Veröffentlichungsnummer: WO 2013/167397

(56) Entgegenhaltungen:
- EP-A2- 0 238 050
- WO-A1-2006/034806
- WO-A1-2008/152024
- WO-A1-2009/109563
- DE-A1- 3 537 276
- DE-A1- 19 955 861
- US-A1- 2008 138 888

## Beschreibung

Die Erfindung betrifft ein Verfahren zum Betrieb eines Mischkneters, umfassend eine oder mehrere Wellen, auf deren Oberflächen Knetbarren angeordnet sind, und die von einem Mantel umschlossen sind, das folgende Schritte umfasst:
(a) Zuführen von Edukten an einer Zugabestelle des Mischkneters,
(b) Umsetzen der Edukte in einer exothermen Reaktion, wobei bei der Reaktion zunächst ein zusammenhängendes knetbares Zwischenprodukt gebildet wird,
(c) Zerreißen und Zerkleinern des zusammenhängenden knetbaren Zwischenprodukts zur Bildung eines Produkts, wobei gegebenenfalls während des Zerreißens und Zerkleinerns die exotherme Reaktion andauert,
(d) Entnehmen des Produkts an einer Entnahmestelle des Mischkneters.

Ein solcher Mischkneter mit mindestens zwei achsparallelen, rotierenden Wellen, auf deren Oberflächen Scheibenflächen mit an ihrem Umfang angeordneten Knetbarren vorgesehen sind, ist beispielsweise aus EP-A 0 517 068 bekannt. Die Knetbarren sind so angeordnet, dass diejenigen auf der einen Welle in die auf der anderen Welle eingreifen. Drehen dabei die Wellen mit unterschiedlichen Drehzahlen, wird die langsamer drehende Welle als Hauptwelle und die schneller drehende Welle als Putzwelle bezeichnet. Die Anzahl der auf der Hauptwelle und der auf der Putzwelle angeordneten Knetbarren ist umgekehrt proportional zum Drehzahlverhältnis. Ist beispielsweise das Drehzahlverhältnis von Hauptwelle zu Putzwelle 4:1, so sind viermal mehr Knetbarren auf der Hauptwelle als auf der Putzwelle über den Umfang der jeweiligen Welle angeordnet.

Neben dem Mischen und Kneten dienen die Knetbarren der Putzwelle auch dazu, die Hauptwelle zu reinigen. Um zu vermeiden, dass auf den Wellen Produkt haften bleibt, können diese wie in EP-A 0 603 525 beschrieben, in axialer Richtung oszillierend hin und her bewegbar ausgebildet sein.

Mischkneter werden zum Beispiel bei der Produktion von Superabsorbern eingesetzt. Superabsorber sind Polymere, die ein Vielfaches ihres Eigengewichts an Flüssigkeit aufnehmen können. Superabsorber werden im Allgemeinen in Form eines grobkörnigen Pulvers beispielsweise in Windeln, Verbandsmaterialien, verschiedenen Hygieneartikeln, usw. eingesetzt.

Bei der Produktion von Superabsorbern werden dem Mischkneter eine Monomerlösung und ein Initiator als Edukte und gegebenenfalls weitere Additive an einer Zugabestelle zugeführt. Die Edukte polymerisieren in einer exothermen Reaktion zu einem zusammenhängenden knetbaren Zwischenprodukt, wobei sich die Zähigkeit des Inhalts des Mischkneters mit zunehmendem Fortschritt der Reaktion erhöht.

Während der Produktion werden dem Mischkneter kontinuierlich Edukte zugegeben und Produkt entnommen. Der Inhalt des Mischkneters wird im Laufe des Verfahrens kontinuierlich von der Zugabestelle in Richtung Entnahmestelle transportiert. Unter dem Inhalt des Mischkneters werden die Edukte, das Produkt und alle Zwischenprodukte verstanden.

Der Inhalt des Mischkneters wird weiter durchgeknetet während sich die Festigkeit des zusammenhängenden knetbaren Zwischenprodukts erhöht. Schließlich wird das zusammenhängende knetbare Zwischenprodukt von den Knetbarren zerrissen und zerkleinert. An einer Entnahmestelle des Mischkneters wird das fertige Produkt entnommen.

Die Wellen des Mischkneters sind bei der Verarbeitung des zusammenhängenden knetbaren Zwischenprodukts hohen Scherkräften ausgesetzt. Diese Belastung ist umso größer, je weiter entfernt von den Lagern der Welle das knetbare Zwischenprodukt gebildet wird.

Ein weiteres Problem stellt das Verkleben des Inhalts des Mischkneters mit der Welle während des Betriebs des Mischkneters dar. Sollten Teile des Inhalts des Mischkneters an einer Welle anbacken, wirken Spannungen auf diese Welle, die zur Bildung von Rissen und damit zu einer Beschädigung der Welle führen können.

Aus dem Stand der Technik sind verschiedene Vorgehensweisen bekannt, um die Belastung der Kneterwellen zu reduzieren und einer Beschädigung des Mischkneters vorzubeugen.

Aus WO 2006/034853 ist ein Verfahren bekannt, bei dem die Wellen des Mischkneters im Betrieb gekühlt werden. Die Kühlung wird eingesetzt, damit sich ein Kondensatfilm auf der Welle ausbildet, welcher ein Verkleben des Produkts mit der Welle verhindert.

Ebenfalls aus WO 2006/034853 ist ein Mischkneter bekannt, bei dem die Wellen so konstruiert und ausgeführt sind, dass die Eigenfrequenzen der Wellen einen Abstand von mindestens 5 % zu den Erregerfrequenzen aufweisen. Dies vermeidet Resonanzen, durch die sich die auf die Wellen einwirkenden Kräfte erheblich verstärken können.

Aus WO 2008/152024 ist ein Verfahren zur Vermeidung von Überbeanspruchungen einer Welle bekannt geworden. Eine Beschädigung der Wellen des Mischkneters wird vermieden, indem die Durchbiegung der Wellen überwacht wird. Werden Durchbiegungen über einem bestimmten Grenzwert gemessen, kann der Mischkneter abgeschaltet werden. Dies hat jedoch den Nachteil, dass dadurch die Produktionskapazität vermindert werden muss. Des Weiteren verfestigt sich das zusammenhängende knetbare Zwischenprodukt bei stehenden Wellen weiter, so dass bei einem späteren Wiederanfahren des Mischkneters Probleme auftreten können.

WO 2009/109563 A offenbart ein Verfahren zur Herstellung von Superabsorbern. Zur Herstellung wird ein Kneter mit mindestens zwei parallelen Wellen verwendet, wobei mindestens eine Welle mit Elementen zum Kneten des enthaltenen Materials ausgestattet ist. Der Kneter kann geheizt oder gekühlt werden.

Eine Reduzierung der Wellenbelastung ist erforderlich, da eine große Wellenbelastung zur Durchbiegung der betroffenen Wellen führt und diese schädigt. Die Lebensdauer der Wellen wird dadurch eingeschränkt, mit der Folge von häufigen Wartungen des Mischkneters und damit verbundenen Produktionsausfällen.

Aufgabe der Erfindung ist es, ein Verfahren für den Betrieb von Mischknetern bereitzustellen, bei dem die Belastung der Wellen im Umgang mit Produkten, bei deren Herstellung zusammenhängende knetbare Zwischenprodukte gebildet werden, minimiert wird, ohne dabei die Produktionskapazität zu vermindern.

Gelöst wird die Aufgabe durch ein Verfahren zum Betrieb eines Mischkneters, umfassend eine oder mehrere Wellen, auf deren Oberflächen Knetbarren angeordnet sind, und die von einem Mantel umschlossen sind, das folgende Schritte umfasst:
(a) Zuführen von Edukten an einer Zugabestelle des Mischkneters,
(b) Umsetzen der Edukte in einer exothermen Reaktion, wobei bei der Reaktion zunächst ein zusammenhängendes knetbares Zwischenprodukt gebildet wird,
(c) Zerreißen und Zerkleinern des zusammenhängenden knetbaren Zwischenprodukts zur Bildung eines Produkts, wobei gegebenenfalls während des Zerreißens und Zerkleinerns die exotherme Reaktion andauert,
(d) Entnehmen des Produkts an einer Entnahmestelle des Mischkneters,
wobei mindestens eine der Wellen und/oder der Mantel während des Betriebs des Mischkneters auf eine Temperatur oberhalb von 20°C geheizt werden und zum Temperieren ein Temperiermedium verwendet wird, wobei die Durchbiegung der mindestens einen Welle gemessen wird und die Eintrittstemperatur des Temperiermediums in Abhängigkeit der Durchbiegung geregelt wird.

Die Verfahrensschritte werden kontinuierlich durchlaufen. In Schritt (a) werden die Edukte an einer Zugabestelle des Mischkneters zugeführt. Bevorzugt wird das erfindungsgemäß vorgeschlagene Verfahren zur Herstellung von Superabsorbern, insbesondere zur Herstellung von Poly(meth)acrylaten verwendet.

Poly(meth)acrylate oder damit verwandte Polymere werden im Allgemeinen durch Copolymerisieren von Edukten der Gruppen
(I) wasserlösliche, monoethylenisch ungesättigte Monomere,
(II) 0,001 bis 5 Mol-% bezogen auf die Monomere (I), mindestens zwei ethylenisch ungesättigte Doppelbindungen enthaltende Monomere und
(III) 0 bis 20 Mol-% bezogen auf die Monomere (I) wasserunlösliche monoethylenisch ungesättigte Monomere
in 20 bis 80 gew.-%iger wässriger Lösung in Gegenwart von Initiator bei Temperaturen von 0 bis 140°C hergestellt.

Wasserlösliche monoethylenisch ungesättigte Monomere der Gruppe (I) sind beispielsweise ethylenisch ungesättigte C₃-bis C₆-Carbonsäuren, deren Amide und Ester mit Aminoalkoholen der Formel 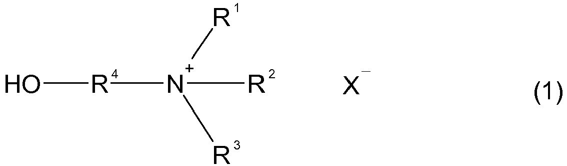 in der R⁴ C₂ bis C₅-Alkylen und R¹, R², R³ unabhängig voneinander Wasserstoff, Methyl, Ethyl oder Propyl bedeuten. Bei diesen Verbindungen handelt es sich beispielsweise um Acrylsäure, Methacrylsäure, Crotonsäure, Itaconsäure, Maleinsäure, Fumarsäure sowie den Alkali- oder Ammoniumsalzen dieser Säuren, Acrylamid, Methacrylamid, Crotonsäureamid, Dimethylaminoethylacrylat, Diethylaminoethylacrylat, Dimethylaminopropylacrylat, Dimethylaminobutylacrylat, Diethylaminoethylmethacrylat, Dimethylaminoethylmethacrylat, Dimethylaminopropylmethacrylat, Dimethylaminoneopentylacrylat und Dimethylaminoneopentylmethacrylat. Die basischen Acrylate und Methacrylate werden in Form der Salze mit starken Mineralsäuren, Sulfonsäuren oder Carbonsäuren oder in quaternisierter Form eingesetzt. Das Anion X- für die Verbindungen der Formel 1 ist der Säurerest der Mineralsäuren bzw. der Carbonsäuren oder Methosulfat, Ethosulfat oder Halogenid aus einem Quaternierungsmittel.

Weitere wasserlösliche Monomere der Gruppe (I) sind N-Vinylpyrrolidon, Acrylamidopropansulfonsäure, Vinylphosphonsäure und/oder Alkali- bzw. Ammonium-salze der Vinylsulfonsäure. Die anderen Säuren können ebenfalls entweder in nicht neutralisierter Form oder in partiell bzw. bis zu 100 % neutralisierter Form bei der Polymerisation eingesetzt werden. Als wasserlösliche Monomere der Gruppe (I) eignen sich auch Diallylammoniumverbindungen, wie Dimethyldiallylammoniumchlorid, Diethyldiallylammoniumchlorid oder Diallylpiperidiniumbromid, N-Vinylimidazoliumverbindungen, wie Salze oder Quaternisierungsprodukte von N-Vinylimidazol und 1-Vinyl-2-methylimidazol, und N-Vinylimidazoline, wie N-Vinylimidazolin, 1-Vinyl-2-methylimidazolin, 1-Vinyl-2-ethylimidazolin oder 1-Vinyl-2-n-propylimidazolin, die ebenfalls in quaternisierter Form oder als Salz bei der Polymerisation eingesetzt werden.

Bevorzugte Monomere der Gruppe (I) sind Acrylsäure, Methacrylsäure sowie die Alkalioder Ammoniumsalze dieser Säuren, Acrylamid und/oder Methacrylamid. Diese Monomere können in jedem beliebigen Verhältnis miteinander copolymerisiert werden.

Die Polymerisation der Monomere der Gruppe (I) erfolgt in Gegenwart von Vernetzern (Monomere der Gruppe (II)). Die Vernetzer enthalten mindestens zwei ethylenisch ungesättigte Doppelbindungen.

Geeignete Vernetzer sind beispielsweise N,N'-Methylenbisacrylamid, Polyethylenglykoldiacrylate und Polyethylenglykoldimethacrylate, die sich jeweils von Polyethylenglykolen eines Molekulargewichts von 126 bis 8500, vorzugsweise 400 bis 2000, ableiten, Trimethylolpropantriacrylat, Trimethylolpropantrimethacrylat, Ethylenglykoldiacrylat, Propylenglykoldiacrylat, Butandioldiacrylat, Hexandioldiacrylat, Hexandioldimethacrylat, Diacrylate und Dimethacrylate von Blockcopolymerisaten aus Ethylenoxid und Propylenoxid, zweifach bzw. dreifach mit Acrylsäure oder Methacrylsäure veresterte mehrwertige Alkohole, wie Glycerin oder Pentaerythrit, Triallylamin, Tetraallylethylendiamin, Divinylbenzol, Diallylphthalat, Polyethylenglykoldivinylether von Polyethylenglykolen eines Molekulargewichts von 126 bis 4000, Trimethylolpropandiallylether, Butandioldivinylether, Pentaerythrittriallylether und/oder Divinylethylenharnstoff. Vorzugsweise setzt man wasserlösliche Vernetzer ein, zum Beispiel N,N-Methylenbisacrylamid, Polyethylenglykoldiacrylat, Polyethylenglykoldimethacrylate, Pentaerythrittriallylether und/oder Divinylharnstoff. Die Monomere der Gruppe (II) werden in Mengen von 0,001 bis 5, vorzugsweise 0,005 bis 0,5 Mol-% bezogen auf die Monomere (I) bei der Copolymerisation eingesetzt.

Die Copolymerisation der Monomere der Gruppen (I) und (II) kann - sofern eine Änderung der Eigenschaften der Copolymerisate gewünscht wird - zusätzlich noch in Gegenwart von Monomeren der Gruppe (III) durchgeführt werden. Als Monomere der Gruppe (III) kommen beispielsweise Hydroxyethylacrylat, Hydroxypropylacrylat, Hydroxyethylmethacrylat, Hydroxypropylmethacrylat, Acrylnitril und/oder Methacrylnitril in Betracht. Außerdem eignen sich Ester der Acrylsäure oder Methacrylsäure mit 1 bis 18 Kohlenstoffatome enthaltenden einwertigen Alkoholen, zum Beispiel Methylacrylat, Ethylacrylat, Propylacrylat, Isopropylacrylat, n-Butylacrylat, Isobutylacrylat, Hexylacrylat, 2-Ethylhexylacrylat, Stearylacrylat, die entsprechenden Ester der Methacrylsäure, Fumarsäurediethylester, Maleinsäurediethylester, Maleinsäuredimethylester, Maleisäuredibutylester, Vinylacetat und Vinylpropionat. Sofern die Monomere der Gruppe (III) zur Modifizierung der wasserlöslichen Poly(meth)acrylate verwendet werden, setzt man 0,5 bis 20, vorzugsweise 2 bis 10 Mol-% bezogen auf die Monomere (I) ein.

Die wasserunlöslichen Monomere können, falls sie bei der Copolymerisation mit eingesetzt werden, mit Hilfe von Emulgatoren in der wässrigen Lösung fein verteilt werden. Geeignete Emulgatoren sind beispielsweise ethoxylierte Nonylphenole, ethoxyliertes Ricinusöl, Alkylsulfate, Sorbitanfettsäureester, ethoxylierte Sorbite, ethoxylierte Sorbitanfettsäureester und Alkylsulfonate.

Solche Emulgatoren werden in einer Menge von 0 bis 3 Gew.-% bezogen auf die Monomere (I) eingesetzt.

Die Polymerisation kann gegebenenfalls in Gegenwart der üblichen Polymerisationsregler erfolgen. Geeignete Polymerisationsregler sind beispielsweise Thioverbindungen, wie Thioglykolsäure, Mercaptoalkohole, zum Beispiel 2-Mercaptoethanol, Mercaptopropanol und Mercaptobutanol, Dodecylmercaptan, Ameisensäure, Ammoniak und Amine, zum Beispiel Ethanolamin, Diethanolamin, Triethanolamin, Triethylamin, Morpholin und Piperidin.

Die Monomere (I), (II) und gegebenenfalls (III) werden in 20 bis 80, vorzugsweise 20 bis 50, insbesondere 30 bis 45gew.-%iger wässriger Lösung in Gegenwart von Polymerisationsinitiatoren miteinander copolymerisiert. Als Polymerisationsinitiatoren können sämtliche unter den Polymerisationsbedingungen in Radikale zerfallende Verbindungen eingesetzt werden, zum Beispiel Peroxide, Hydroperoxide, Wasserstoffperoxid, Persulfate, Azoverbindungen und die sogenannten Redoxkatalysatoren. Bevorzugt ist der Einsatz von wasserlöslichen Katalysatoren. In manchen Fällen ist es vorteilhaft, Mischungen verschiedener Polymerisationsinitiatoren zu verwenden, zum Beispiel Mischungen aus Wasserstoffperoxid und Natrium- oder Kaliumperoxodisulfat. Mischungen aus Wasserstoffperoxid und Natriumperoxodisulfat können in jedem beliebigen Verhältnis verwendet werden. Geeignete organische Peroxide sind beispielsweise Acetylacetonperoxid, Methylethylketonperoxid, tert.-Butylhydroperoxid, Cumolhydroperoxid, tert.-Amylperpivalat, tert.-Butylperpivalat, tert.-Butylperneohexanoat, tert.-Butylperiso-butyrat, tert.-Butylper-2-ethylhexanoat, tert.-Butylperisononanoat, tert.-Butylpermaleat, tert.-Butylperbenzoat, tert.-Butylper-3,5,5-tri-methylhexanoat und tert.-Amylperneo-dekanoat. Weitere geeignete Polymerisationsinitiatoren sind Azostarter, zum Beispiel 2,2'-Azobis-(2-amidinopropan)dihydrochlorid, 2,2'-Azobis-(N,N-dimethylen)isobutyramidindihydrochlorid, 2-(Carbamoylazo)isobutyronitril und 4,4'-Azobis-(4-cyanovaleriansäure). Die genannten Polymerisationsinitiatoren werden in üblichen Mengen eingesetzt, zum Beispiel in Mengen von 0,01 bis 5, vorzugsweise 0,1 bis 2 Mol-%, bezogen auf die zu polymerisierenden Monomere.

Die Redoxkatalysatoren enthalten als oxidierende Komponente mindestens eine der oben angegebenen Perverbindungen und als reduzierende Komponente beispielsweise Ascorbinsäure, Glukose, Sorbose, Ammonium- oder Alkalimetallhydrogensulfit, -sulfit, -thiosulfat, -hyposulfit, -pyrosulfit oder -sulfid, Metallsalze, wie Eisen-II-ionen oder Silberionen oder Natriumhydroxymethylsulfoxylat. Vorzugsweise verwendet man als reduzierende Komponente des Redoxkatalysators Ascorbinsäure oder Natriumpyrosulfit. Bezogen auf die bei der Polymerisation eingesetzte Menge an Monomeren verwendet man 1·10⁻⁵ bis 1 Mol-% der reduzierenden Komponente des Redoxkatalysatorsystems und 1·10⁻⁵ bis 5 Mol-% der oxidierenden Komponente des Redoxkatalysators. Anstelle der oxidierenden Komponente des Redoxkatalysators oder zusätzlich kann man auch einen oder mehrere wasserlösliche Azostarter verwenden.

Bevorzugt wird im erfindungsgemäßen Verfahren ein Redoxsystem bestehend aus Wasserstoffperoxid, Natriumperoxodisulfat und Ascorbinsäure eingesetzt. In einer üblichen Ausführungsform werden diese Komponenten in den Konzentrationen 1·10⁻² Mol-% Wasserstoffperoxid, 0,084 Mol-% Natriumperoxodisulfat und 2,5·10⁻³ Mol-% Ascorbinsäure bezogen auf die Monomere eingesetzt.

Die wässrige Monomerlösung kann den Initiator gelöst oder dispergiert enthalten. Die Initiatoren können jedoch auch getrennt von der Monomerlösung dem Mischkneter zugeführt werden.

Die Monomerlösung wird vor der Polymerisation von Restsauerstoff befreit. Dies geschieht mittels Inertgas, welches im Gleichstrom, Gegenstrom oder dazwischenliegenden Eintrittswinkeln eingeleitet werden kann. Eine gute Durchmischung kann beispielsweise mit Düsen, statischen oder dynamischen Mischern oder Blasensäulen erzielt werden.

Bevorzugt wird der über dem Füllstand liegende Innenraum des Mischkneters mit einem Inertgas gefüllt. Als Inertgase können unabhängig voneinander Stickstoff, ein Edelgas wie Argon oder andere Gase, die nicht mit dem Inhalt des Mischkneters reagieren wie beispielsweise Kohlenmonoxid, Kohlendioxid, Schwefelhexafluorid verwendet werden. Die Verwendung von Mischungen dieser Gase ist ebenfalls denkbar. Dabei ist es möglich ein gegenüber dem Inhalt des Mischkneters inertes Gas ganz oder teilweise durch eine chemische Reaktion im Mischkneter zu erzeugen. Bevorzugt wird Stickstoff als Inertgas eingesetzt. Das Inertgas kann sowohl im Gleichstrom als auch im Gegenstrom zum Inhalt durch den Mischkneter geführt werden. Das Inertgas kann dabei zusammen mit den Edukten an der Zugabestelle zugeführt und zusammen mit dem Produkt an der Entnahmestelle aus dem Mischkneter entnommen werden. Ebenso können separate Einlässe und Auslässe für das Inertgas am Mischkneter vorgesehen werden.

In einer bevorzugten Ausführungsform des Verfahrens liegt die Temperatur der Edukte vor dem Eintritt in den Mischkneter im Bereich von 5°C bis 30°C.

In Verfahrensschritt (b) reagieren die dem Mischkenter zugeführten Edukte. Dabei wird der Inhalt des Mischkneters durch die Knetbarren geknetet und durchmischt. Der Inhalt des Mischkneters umfasst die Edukte, das Produkt und alle Zwischenprodukte. Zu Beginn der Reaktion weisen die Edukte nur eine geringe Viskosität auf, und die auf die Wellen einwirkenden Kräfte sind gering. Beim Transport von der Zugabestelle zur Entnahmestelle des Mischkneters polymerisieren die Edukte, und es wird das zusammenhängende knetbare Zwischenprodukt gebildet.

Beim Durchkneten des knetbaren Zwischenprodukts durch den Mischkneter werden die Wellen des Mischkneters belastet. Zudem können sich bei der Polymerisation Klumpen im zusammenhängenden knetbaren Zwischenprodukt bilden. Diese Klumpen sind fester als das übrige knetbare Zwischenprodukt und müssen durch den Mischkneter zerkleinert werden. Bei der Zerkleinerung der Klumpen und dem Durchmischen des zusammenhängenden knetbaren Zwischenprodukts wirken große Scherkräfte auf die Wellen, die zu einer Durchbiegung der Wellen führen. Die Durchbiegung, und damit die Materialbeanspruchung der Welle, ist umso größer, je weiter entfernt von den Lagern der Welle das zusammenhängende knetbare Zwischenprodukt entsteht.

Bei den Verfahren nach dem Stand der Technik setzt die Polymerisierungsreaktion nur langsam ein, und die vom zusammenhängenden knetbaren Zwischenprodukt verursachte Scherkraft wirkt in einiger Entfernung von den Lagern auf die Welle ein.

Bei dem erfindungsgemäßen Verfahren werden mindestens eine der Wellen und/oder der Mantel während des Betriebs des Mischkneters auf eine Temperatur oberhalb von 20 °C geheizt. Das Heizen erfolgt bevorzugt durch Durchströmen der zu heizenden Teile mit einem Temperiermedium.

Überraschenderweise tritt bei der Beheizung der befürchtete Effekt, dass der Inhalt des Mischkneters ohne einen schützenden Wasserfilm an den Wellen kleben bleibt, nicht auf. Stattdessen wird eine deutliche Reduzierung der Durchbiegung der Wellen beobachtet.

Aufgrund der Beheizung mindestens einer der Wellen und/oder des Mantels wird die Polymerisierungsreaktion beschleunigt, und der Bereich im Mischkneter, in dem die Reaktion zur Bildung des zusammenhängenden knetbaren Zwischenprodukt ihr Maximum erreicht, rückt näher an die Zugabestelle heran.

Bei Verfahren nach dem Stand der Technik setzt die Polymerisierungsreaktion nur langsam ein. Das Reaktionsmaximum wird erst erreicht, wenn der Inhalt des Mischkneters etwa die Hälfte der Strecke zwischen der Zugabestelle und der Entnahmestelle des Mischkneters zurückgelegt hat.

Durch das Heizen mindestens einer Welle und/oder des Mantels entsteht das zusammenhängende knetbare Zwischenprodukt näher an der Zugabestelle. Dadurch wirken die beim Kneten des Zwischenprodukts und beim Auflösen von Klumpen auftretenden Kräfte an einer näher an den Lagern liegenden Stelle auf die Wellen ein. Die auf die Wellen übertragenen Kräfte können mit einer geringeren Durchbiegung der Welle auf die Lager übertragen werden.

Ein weiterer vorteilhafter Effekt des Verfahrens ist eine Reduzierung der Torsionsbelastung der Wellen. Eine Torsionsbelastung tritt auf, wenn der Drehung der Welle ein über die Länge der Welle ungleichmäßiger Widerstand entgegengesetzt wird. Dies ist im Mischkneter durch die sich bei der Polymerisierung und anschließenden Zerkleinerung ändernde Konsistenz des Inhalts gegeben.

Durch den Einsatz des erfindungsgemäßen Verfahrens wird die Polymerisationsreaktion beschleunigt und die Konsistenz des verarbeiteten Inhalts des Mischkneters ist über die dem Inhalt ausgesetzte Länge der Wellen gleichmäßiger.

Eine Temperierung des Mischkneters mittels eines Temperiermediums ist besonders bevorzugt, da die Bildung des zusammenhängenden knetbaren Zwischenprodukts in einer exothermen Reaktion erfolgt. Im Gegensatz zu einer elektrischen Heizung oder einer Beheizung mittels Induktion kann ein Temperiermedium die im Prozess entstehende Wärme aufnehmen und abführen und/oder verteilen.

Bei Verwendung eines Temperiermediums erfolgt in einer Ausführungsform das Heizen des Mischkneters über mindestens eine der Wellen. Die zum Heizen verwendeten Wellen werden als Hohlwellen ausgebildet und werden von dem Temperiermedium durchströmt. Der Einlass für das Temperiermedium kann auf der einen Seite der Welle und der Auslass auf der anderen Seite der Welle angeordnet sein. Je nachdem auf welcher Seite der Welle der Einlass angeordnet ist, durchströmt das Temperiermedium die Welle im Gleichstrom mit dem Inhalt im Mischkneter oder im Gegenstrom.

Möglich ist aber auch eine Ausführungsform, bei der sowohl Einlass als auch Auslass für das Temperiermedium auf derselben Seite der Welle liegen. Dabei strömt das Temperiermedium in einem inneren Kanal der Welle zunächst zum entgegengesetzten Ende, um anschließend in einem äußeren, den inneren Kanal umschließenden, Kanal zurückzulaufen. Die Geometrie des äußeren Kanals kann beispielsweise ringförmig oder spiralförmig sein. Auch eine auf die Zylinderform angepasste mäanderförmige Führung des Kanals ist möglich. Ebenfalls ist es möglich, das Temperiermedium in umgekehrter Richtung durch die Welle zu leiten, so dass das Temperiermedium in den äußeren Kanal einströmt, und durch den inneren Kanal zurückläuft. Bei beiden Ausführungsformen kann das Temperiermedium den äußeren Kanal der mindestens einen Welle sowohl im Gleichstrom als auch im Gegenstrom zum Inhalt des Mischkneters durchlaufen, indem die Anschlüsse auf der entsprechenden Seite der Welle vorgesehen werden.

Neben oder anstelle von mindestens einer der Wellen kann auch der Mantel beheizt werden. Hierzu wird dieser als Doppelmantel ausgeführt, welcher einen Spalt bildet, durch den das Temperiermedium strömt. Das Temperiermedium kann den Mantel sowohl im Gleichstrom als auch im Gegenstrom zum Inhalt des Mischkneters durchlaufen. Möglich ist auch eine Stromrichtung senkrecht zur Laufrichtung des Inhalts des Mischkneters. Auch eine Kombination einer solchen Kreuzströmung mit dem Durchlaufen in Stromrichtung oder Gegenstromrichtung ist denkbar, indem das Temperiermedium beispielweise mäanderförmig durch den Doppelmantel geleitet wird.

Als Temperiermedien eignen sich flüssige und gasförmige Medien, insbesondere Wasser, Wasserdampf, ein Thermalöl oder eine Salzschmelze.

Die Temperatur, die das Temperiermedium vor dem Eintritt in die mindestens eine Welle und/oder den Mantel aufweist, wird Eintrittstemperatur genannt. Die nach dem Durchströmen der mindestens einen Welle und/oder des Mantels gemessene Temperatur des Temperiermediums wird als Austrittstemperatur bezeichnet.

Die Eintrittstemperatur des Temperiermediums liegt typischerweise zwischen 20°C und 99°C, bevorzugt im Bereich von 20°C bis 60°C und besonders bevorzugt im Bereich von 30°C bis 60°C. Beim Durchströmen der mindestens einen Welle und/oder des Mantels nimmt das Temperiermedium Wärme auf, die bei der exothermen Polymerisationsreaktion im Inneren des Mischkneters entsteht. Die Austrittstemperatur liegt dadurch in der Regel über der Eintrittstemperatur. Die Temperaturerhöhung hängt von der freiwerdenden Reaktionswärme, den physikalischen Eigenschaften des Temperiermediums und von dem Volumenstrom des Temperiermediums ab. Bei vorgegebenem Temperiermedium kann die Temperaturerhöhung bzw. die Aufnahme von Reaktionswärme aus dem Mischkneter über den Volumenstrom des Temperiermediums eingestellt werden.

Bei der Verwendung von Wasser ist es bevorzugt, wenn das Temperiermedium durch die Aufnahme der Reaktionswärme bis zu seiner Siedetemperatur erwärmt wird. Der Siedepunkt des Temperiermediums kann gegebenenfalls durch die Verwendung eines über dem Atmosphärendruck liegenden Betriebsdruck erhöht werden. Typischerweise liegt die Austrittstemperatur des Temperiermediums im Bereich von 20°C bis 120°C.

Desweiteren sollte die Temperatur des Temperiermediums nie die Zersetzungstemperatur der im Mischkneter verarbeiteten Materialen bzw. die Siedetemperatur des im Mischkenter enthaltenen Gemischs überschreiten. Bei der Herstellung von als Superabsorber eingesetzten Poly(meth)acrylaten liegt die durch die Zersetzungstemperatur vorgegebene Obergrenze typischerweise bei ca. 200 °C, der Siedepunkt des enthaltenen Gemischs liegt typischerweise unterhalb von 120°C. Die Austrittstemperatur des Temperiermediums liegt bevorzugt im Bereich von 20°C bis 110°C, so dass die Temperatur des Temperiermediums unterhalb des Siedepunkts des im Mischkneters enthaltenen Gemischs liegt. Der Volumenstrom des Temperiermediums wird so gewählt, dass die Austrittstemperatur eingehalten wird.

Bevorzugt wird als Temperiermedium Wasser mit einer Eintrittstemperatur in die Welle bzw. den Mantel im Bereich von 20 °C bis 99 °C verwendet. Bevorzugt liegt die Eintrittstemperatur des Temperiermediums im Bereich von 20°C bis 60°C, besonders bevorzugt im Bereich von 30 °C bis 60 °C. Die Austrittstemperatur des Temperiermediums liegt bei der Verwendung von Wasser bevorzugt im Bereich von 20°C bis 110°C, besonders bevorzugt im Bereich von 60°C und 110°C und ganz besonders bevorzugt im Bereich von 80°C bis 105°C.

In einer Verfahrensvariante wird die mindestens eine Welle und/oder der Mantel beim Anfahren vor der Zugabe der Edukte vorgeheizt.

Gemäß dem beanspruchten Verfahren wird die Durchbiegung der mindestens einen Welle gemessen und die Eintrittstemperatur des Temperiermediums in Abhängigkeit der Durchbiegung geregelt.

Die Durchbiegung der Welle kann über eine Messung der Abweichung der Welle von der radialen Position ermittelt werden. Die radiale Position kann beispielsweise über mindestens zwei zueinander radial versetzte Messwertaufnehmer oder ein anderes dem Fachmann bekanntes Verfahren erfasst werden.

Bevorzugt werden ein oberer Grenzwert und ein unterer Grenzwert für die Durchbiegung vorgegeben. Bei Überschreiten des oberen Grenzwertes ist die Belastung der Welle zu hoch und es müssen Maßnahmen zur Senkung der Durchbiegung getroffen werden. Bei Unterschreiten des unteren Grenzwertes können diese Maßnahmen wieder zurückgenommen werden.

Liegt die ermittelte Durchbiegung der mindestens einen Welle über dem oberen Grenzwert, wird die Eintrittstemperatur des Temperiermediums erhöht. Dadurch wird der Verlauf der Polymerisierungsreaktion beschleunigt und die Verteilung der auf die mindestens eine Welle einwirkenden Kräfte wird so verändert, dass das Maximum der Kräfte in Richtung der Zugabestelle verschoben wird, Die Kräfte wirken damit näher am Lager auf der Eduktseite auf die Welle ein und die Durchbiegung der mindestens einen Welle wird verringert.

Eine Veränderung der Temperatur des Temperiermediums verändert auch die Temperatur im Inneren des Mischkneters und beeinflusst somit die im Inneren des Mischkneters ablaufenden Reaktionen. Da sich dies auch auf das Endprodukt bzw. dessen Qualität auswirken kann, ist eine unnötige Temperaturerhöhung unerwünscht. Bevorzugt wird deswegen die Eintrittstemperatur des Temperiermediums gesenkt, falls die ermittelte Durchbiegung der mindestens einen Welle unterhalb des unteren Grenzwertes liegt, oder falls die Qualität des Produkts es erfordert.

In Verfahrensschritt (c) wird das zusammenhängende knetbare Zwischenprodukt von den Knetbarren weiter durchgeknetet, während sich seine Festigkeit erhöht. Schließlich wird das zusammenhängende knetbare Zwischenprodukt von den Knetbarren zerrissen und zerkleinert. Beim Zerreißen des zusammenhängenden knetbaren Zwischenprodukts wirken weiter Kräfte auf die Wellen ein, bis die Zerkleinerung des Produktes in einen rieselfähigen Zustand abgeschlossen ist.

Im Bereich der Entnahmestelle des Mischkneters ist das Produkt zerkleinert und übt nur noch geringe Belastungen auf die Kneterwellen aus.

Im letzten Verfahrensschritt (d) wird das Produkt an der Entnahmestelle des Mischkneters entnommen.

Im Folgenden wird die Erfindung anhand von Zeichnungen näher beschrieben.

Darin zeigt:
- Figur 1: einen Schnitt durch einen Mischkneter in Draufsicht,
- Figur 2: eine Skizze des Verlaufs der auf eine Kneterwelle einwirkenden Kräfte in Abhängigkeit der vom Inhalt des Mischkneters zurückgelegten Strecke.

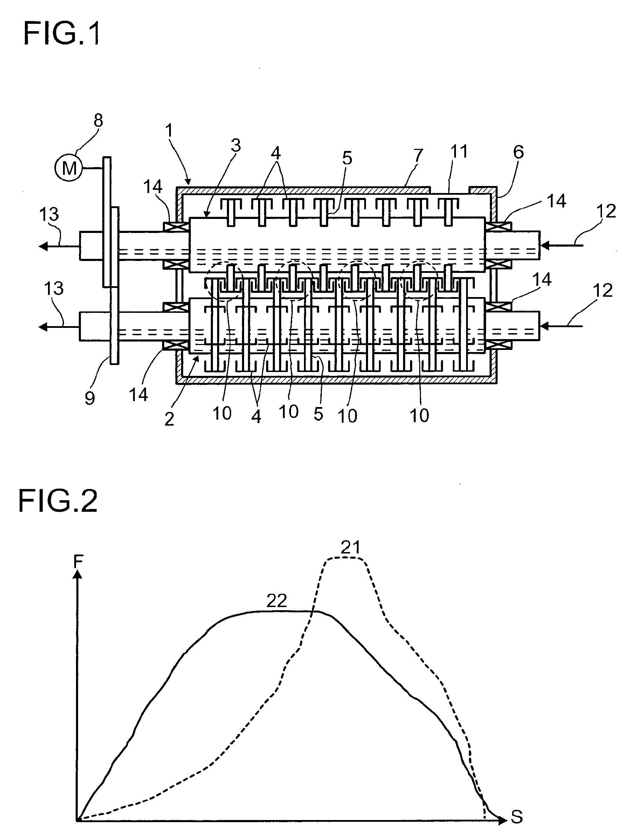

Ein Mischkneter 1, wie in Figur 1 dargestellt, umfasst eine Hauptwelle 2 und eine Putzwelle 3. Sowohl auf der Hauptwelle 2 als auch auf der Putzwelle 3 sind über den Umfang verteilt Knetbarren 4 angeordnet, die mit Stegen 5 mit der Hauptwelle 2 bzw. Putzwelle 3 verbunden sind. In der hier dargestellten Ausführungsform sind auf der Hauptwelle 2, über den Umfang der Hauptwelle 2 verteilt, acht Knetbarren 4 angeordnet. Im Unterschied dazu sind auf der Putzwelle 3 über den Umfang verteilt nur zwei Knetbarren 4 angeordnet.

Die Knetbarren 4 sind vorzugsweise U-förmig ausgebildet und greifen - wie in Figur 1 dargestellt - an der Seite, an der die Putzwelle 3 und die Hauptwelle 2 benachbart sind, ineinander. Hierdurch wird durch die Putzwelle 3 das Material, welches sich auf der Hauptwelle zwischen den Stegen ansammelt, entfernt. In der hier dargestellten Ausführungsform, bei der auf der Hauptwelle 2 acht Knetbarren 4 über den Umfang verteilt angeordnet sind und auf der Putzwelle 3 zwei Knetbarren 4, rotiert die Putzwelle 3 viermal so schnell wie die Hauptwelle 2. Hierdurch wird gewährleistet, dass die Knetbarren 4 der Putzwelle 3 in alle Knetbarren 4 der Hauptwelle 2 eingreifen. Neben der hier dargestellten Ausführungsform mit acht Knetbarren 4 auf der Hauptwelle 2 und zwei Knetbarren 4 auf der Putzwelle 3, ist jede beliebige andere Kombination an Knetbarren 4 auf Putzwelle 3 und Hauptwelle 2 denkbar. Anhand der Anzahl der Knetbarren 4 auf der Hauptwelle 2 und der Putzwelle 3 wird das Drehzahlverhältnis von Hauptwelle 2 zu Putzwelle 3 eingestellt.

Die Hauptwelle 2 und die Putzwelle 3 sind von einem Gehäuse bzw. Mantel 6 umschlossen. Um ein Temperieren des Mischkneters 1 zu ermöglichen, ist das Gehäuse 6 vorzugsweise mit einem Doppelmantel ausgeführt. Hierdurch wird ein Spalt 7 im Gehäuse gebildet, der von einem Temperiermedium durchströmt werden kann.

Die Wellen sind vorzugsweise über einen Motor 8 und ein Getriebe 9 angetrieben. Über das Getriebe ist die Geschwindigkeit der Wellen 2, 3 definiert. So ist es möglich, dass die Hauptwelle 2 und die Putzwelle 3 mit unterschiedlicher Geschwindigkeit rotieren, auch ist es möglich, dass die Hauptwelle 2 und die Putzwelle 3 mit gleicher Geschwindigkeit rotieren, weiterhin können die Hauptwelle 2 und die Putzwelle 3 entweder gleichsinnig oder gegensinnig betrieben werden.

Im Gehäuse 6 befinden sich oberhalb der Hauptwelle 2 und der Putzwelle 3 Öffnungen 10, die hier gestrichelt dargestellt sind. Über die Öffnungen 10 können dem Mischkneter 1 Edukte zugeführt werden. Auch ist es möglich, dass das im Mischkneter 1 hergestellte Produkt über die Öffnungen 10 entgast wird.

Zur Produktentnahme ist im Gehäuse 6 eine Öffnung 11 ausgebildet. Die Öffnung 11 zur Produktentnahme ist dabei vorzugsweise auf der Seite der Putzwelle 3 angeordnet, kann aber auch auf der Seite der Hauptwelle 2 angeordnet sein.

Die Hauptwelle 2 und die Putzwelle 3 erstrecken sich in der in Figur 1 dargestellten Ausführungsform über die gesamte Länge des Mischkneters 1 und sind beidseitig gelagert. Zur Lagerung der Wellen 2, 3 sind an den beiden Enden des Mischkneters 1 jeweils Lager 14 angeordnet.

Zum Heizen der Hauptwelle 2 und der Putzwelle 3 werden diese von einem Temperiermedium durchströmt. Die mit Bezugszeichen 12 bezeichneten Pfeile zeigen die Stelle, an der das Temperiermedium der Hauptwelle 2 bzw. Putzwelle 3 zugeführt wird. An der mit Bezugszeichen 13 gekennzeichneten Stelle wird das Temperiermedium wieder aus der Hauptwelle 2 bzw. Putzwelle 3 abgezogen. Neben der hier dargestellten Temperierung der Putzwelle 3 bzw. Hauptwelle 2 im Gegenstrom ist auch eine Temperierung der Wellen 2, 3 im Gleichstrom möglich. Bei einer Temperierung im Gleichstrom wird das Temperiermedium entgegen der Pfeilrichtung an der mit Bezugszeichen 13 bezeichneten Stelle aufgegeben und an der mit Bezugszeichen 12 bezeichneten Stelle entnommen.

In Figur 2 ist sind im Vergleich die ortsabhängige Krafteinwirkung auf eine Welle des Mischkneters bei Kühlung nach dem Stand der Technik und bei erfindungsgemäßer Beheizung der Wellen dargestellt. Der Ort bezieht sich dabei auf die vom Inhalt des Mischkneters durchlaufene Strecke und ist in % bezogen auf die Strecke zwischen der Zugabestelle und der Entnahmestelle des Mischkneters angegeben.

Die als gestrichelte Linie dargestellte erste Kurve 21 zeigt den Verlauf der Krafteinwirkung bei einem Verfahren zum Betrieb eines Mischkneters nach dem Stand der Technik. Die Reaktion zur Bildung des zusammenhängenden knetbaren Zwischenprodukts läuft in der Nähe der Zugabestelle nur sehr langsam ab. Dies führt zu einem Kraftverlauf mit einer geringen Belastung der Wellen in der Nähe der Lager und einer hohen Belastung im mittleren Teil der Wellen. Bei gleicher Kraft ist die Durchbiegung und damit die Schädigung der Wellen umso größer, je weiter in der Mitte der Welle die Kraft auf die Welle wirkt. Typischerweise tritt die größte vom zusammenhängenden knetbaren Zwischenprodukt verursachte Belastung etwa bei der Hälfte der Strecke zwischen der Zugabestelle und der Entnahmestelle des Mischkneters auf.

Die als durchgezogene Linie dargestellte zweite Kurve 22 zeigt den Verlauf der Krafteinwirkung bei Anwendung des erfindungsgemäß vorgeschlagenen Verfahrens. Die Reaktion zur Bildung des zusammenhängenden knetbaren Zwischenprodukts ist deutlich beschleunigt und der Bereich mit der Größten Krafteinwirkung auf die Wellen liegt näher an der Zugabestelle des Mischkneters. Da der Ort der Krafteinwirkung im Vergleich zum Stand der Technik näher an den Lagern auf der Eduktseite der Wellen liegt, kann die Kraft mit einer geringeren Durchbiegung der Welle auf die Lager übertragen werden. Die Reaktion verläuft zudem gleichmäßiger und die maximal auftretende Kraft wird geringer.

### Bezugszeichenliste

- 1: Mischkneter
- 2: Hauptwelle
- 3: Putzwelle
- 4: Knetbarren
- 5: Steg
- 6: Gehäuse
- 7: Spalt
- 8: Motor
- 9: Getriebe
- 10: Öffnung
- 11: Öffnung
- 12: Zulauf Temperiermedium
- 13: Ablauf Temperiermedium
- 14: Lager
- 21: erste Kurve
- 22: zweite Kurve

## Patentansprüche

1. Verfahren zum Betrieb eines Mischkneters (1), umfassend eine oder mehrere Wellen (2, 3), auf deren Oberflächen Knetbarren (4) angeordnet sind, und die von einem Mantel (6) umschlossen sind, folgende Schritte umfassend:
(a) Zuführen von Edukten an einer Zugabestelle (10) des Mischkneters (1),
(b) Umsetzen der Edukte in einer exothermen Reaktion, wobei bei der Reaktion zunächst ein zusammenhängendes knetbares Zwischenprodukt gebildet wird,
(c) Zerreißen und Zerkleinern des zusammenhängenden knetbaren Zwischenprodukts zur Bildung eines Produkts, wobei gegebenenfalls während des Zerreißens und Zerkleinerns die exotherme Reaktion andauert,
(d) Entnehmen des Produkts an einer Entnahmestelle (11) des Mischkneters (1),
wobei mindestens eine der Wellen (2, 3) und/oder der Mantel (6) während des Betriebs des Mischkneters (1) auf eine Temperatur oberhalb von 20 °C geheizt werden und zum Temperieren ein Temperiermedium verwendet wird, **dadurch gekennzeichnet, dass** die Durchbiegung der mindestens einen Welle (2, 3) gemessen wird und die Eintrittstemperatur des Temperiermediums in Abhängigkeit der Durchbiegung geregelt wird.

2. Verfahren gemäß Anspruch 1, **dadurch gekennzeichnet, dass** die mindestens eine Welle (2, 3) von einem Temperiermedium durchströmt wird.

3. Verfahren gemäß Anspruch 1 oder 2, **dadurch gekennzeichnet, dass** der Mantel (6) als Doppelmantel ausgeführt ist, wobei der Doppelmantel einen Spalt (7) bildet, durch den ein Temperiermedium strömt.

4. Verfahren gemäß einem der Ansprüche 1 bis 3, **dadurch gekennzeichnet, dass** die Eintrittstemperatur des Temperiermediums erhöht wird, falls die gemessene Durchbiegung der mindestens einen Welle (2, 3) über einem vorgegebenen oberen Grenzwert liegt.

5. Verfahren gemäß einem der Ansprüche 1 bis 4, **dadurch gekennzeichnet, dass** die Eintrittstemperatur des Temperiermediums gesenkt wird, falls die gemessene Durchbiegung der mindestens einen Welle (2, 3) unter einem unteren Grenzwert liegt und/oder falls die Qualität des entnommenen Produkts abnimmt.

6. Verfahren gemäß einem der Ansprüche 1 bis 5, **dadurch gekennzeichnet, dass** das Temperiermedium die mindestens eine Welle (2, 3) und/oder den Doppelmantel im Gleichstrom oder im Gegenstrom zum Inhalt des Mischkneters (1) durchläuft.

7. Verfahren gemäß einem der Ansprüche 1 bis 6, **dadurch gekennzeichnet, dass** das Temperiermedium Wasser, Wasserdampf, ein Thermalöl oder eine Salzschmelze ist.

8. Verfahren gemäß einem der Ansprüche 1 bis 7, **dadurch gekennzeichnet, dass** die Eintrittstemperatur des Temperiermediums zwischen 20°C und 99°C liegt.

9. Verfahren gemäß einem der Ansprüche 1 bis 8, **dadurch gekennzeichnet, dass** die maximale Temperatur des Temperiermediums unterhalb der Zersetzungstemperatur der im Mischkneter (1) enthaltenen Materialien und/oder Siedetemperatur der im Mischkenter enthaltenden Gemischs liegt.

10. Verfahren gemäß einem der Ansprüche 1 bis 9, **dadurch gekennzeichnet, dass** die Austrittstemperatur des Temperiermediums zwischen 20°C und 120°C liegt.

11. Verfahren gemäß einem der Ansprüche 1 bis 10, **dadurch gekennzeichnet, dass** mindestens eine Welle (2, 3) und/oder der Mantel (6) vor der Zugabe der Edukte vorgeheizt werden.

12. Verfahren gemäß einem der Ansprüche 1 bis 11, **dadurch gekennzeichnet, dass** die Temperatur der Edukte vor dem Eintritt in den Mischkneter (1) zwischen 5°C und 30°C liegt.

13. Verfahren gemäß einem der Ansprüche 1 bis 12, **dadurch gekennzeichnet, dass** als Edukt ein wasserlösliches, monoethylenisch ungesättigtes Monomer, insbesondere Acrylsäure oder Methacrylsäure, zugegeben wird.

14. Verfahren gemäß Anspruch 13, **dadurch gekennzeichnet, dass** als weiteres Edukt ein mindestens zwei ethylenisch ungesättigte Doppelbindungen enthaltender Vernetzer zugegeben wird.

15. Verfahren gemäß Anspruch 13 oder 14, **dadurch gekennzeichnet, dass** als weiteres Edukt ein wasserunlösliches monoethylenisch ungesättigtes Monomer, insbesondere Hydroxyethylacrylat, Hydroxypropylacrylat, Hydroxyethylmethacrylat, Hydroxypropylmethacrylat, Acrylnitril und/oder Methacrylnitril, zugegeben wird.

16. Verfahren gemäß einem der Ansprüche 13 bis 15, **dadurch gekennzeichnet, dass** als weiteres Edukt ein Polymerisationsinitiator, insbesondere ein Redoxsystem bestehend aus Wasserstoffperoxid, Natriumperoxodisulfat und Ascorbinsäure, zugegeben wird.

## Claims

1. A process for operating a mixing kneader (1), comprising one or more shafts (2, 3) on whose surfaces are disposed kneading bars (4) and which are surrounded by a casing (6), comprising the following steps:
(a) supplying reactants at an addition site (10) in the mixing kneader (1),
(b) converting the reactants in an exothermic reaction, the reaction at first forming a coherent kneadable intermediate,
(c) tearing and dividing the coherent kneadable intermediate to form a product, the exothermic reaction optionally continuing during the tearing and division,
(d) withdrawing the product at a withdrawal site (11) in the mixing kneader (1),
wherein at least one of the shafts (2, 3) and/or the casing (6) is heated to a temperature above 20°C during the operation of the mixing kneader (1) and a temperature control medium is used for temperature control, wherein the bending of the at least one shaft (2, 3) is measured and the inlet temperature of the temperature control medium is regulated as a function of the bending.

2. The process according to claim 1, wherein a temperature control medium flows through the at least one shaft (2, 3).

3. The process according to claim 1 or 2, wherein the casing (6) is designed as a jacket, and the jacket forms a gap (7) through which a temperature control medium flows.

4. The process according to any of claims 1 to 3, wherein the inlet temperature of the temperature control medium is increased if the measured bending of the at least one shaft (2, 3) is above a given upper limit.

5. The process according to any of claims 1 to 4, wherein the inlet temperature of the temperature control medium is lowered if the measured bending of the at least one shaft (2, 3) is below a lower limit and/or if the quality of the product withdrawn decreases.

6. The process according to any of claims 1 to 5, wherein the temperature control medium runs through the at least one shaft (2, 3) and/or the jacket in cocurrent or in countercurrent to the contents of the mixing kneader (1).

7. The process according to any of claims 1 to 6, wherein the temperature control medium is water, steam, a thermal oil or a salt melt.

8. The process according to any of claims 1 to 7, wherein the inlet temperature of the temperature control medium is between 20°C and 99°C.

9. The process according to any of claims 1 to 8, wherein the maximum temperature of the temperature control medium is below the decomposition temperature of the materials present in the mixing kneader (1) and/or boiling temperature of the mixture present in the mixing kneader.

10. The process according to any of claims 1 to 9, wherein the outlet temperature of the temperature control medium is between 20°C and 120°C.

11. The process according to any of claims 1 to 10, wherein at least one shaft (2, 3) and/or the casing (6) is preheated prior to the addition of the reactants.

12. The process according to any of claims 1 to 11, wherein the temperature of the reactants prior to entry into the mixing kneader (1) is between 5°C and 30°C.

13. The process according to any of claims 1 to 12, wherein the reactant added is a water-soluble, monoethylenically unsaturated monomer, especially acrylic acid or methacrylic acid.

14. The process according to claim 13, wherein the further reactant added is a crosslinker comprising at least two ethylenically unsaturated double bonds.

15. The process according to claim 13 or 14, wherein the further reactant added is a water-insoluble monoethylenically unsaturated monomer, especially hydroxyethyl acrylate, hydroxypropyl acrylate, hydroxyethyl methacrylate, hydroxypropyl methacrylate, acrylonitrile and/or methacrylonitrile.

16. The process according to any of claims 13 to 15, wherein the further reactant added is a polymerization initiator, especially a redox system consisting of hydrogen peroxide, sodium peroxodisulfate and ascorbic acid.

## Revendications

1. Procédé pour l'exploitation d'un malaxeurmélangeur (1), comprenant un ou plusieurs arbres (2, 3), sur les surfaces desquels sont disposées des barres de malaxage (4), et qui sont entourés d'une enveloppe (6), comprenant les étapes suivantes :
(a) amenée de produits de départ à un point de charge (10) du malaxeur-mélangeur (1),
(b) conversion des produits de départ dans une réaction exothermique, avec, lors de la réaction, d'abord formation d'un produit intermédiaire malaxable continu,
(c) déchiquetage et broyage du produit intermédiaire malaxable continu pour former un produit, la réaction exothermique persistant éventuellement pendant le déchiquetage et le broyage,
(d) prélèvement du produit en un point de prélèvement (11) du malaxeur-mélangeur (1),
dans lequel au moins l'un des arbres (2, 3) et/ou l'enveloppe(6) sont, pendant l'exploitation du malaxeurmélangeur (1), chauffés à une température supérieure à 20°C, un fluide de mise en température étant utilisé pour la mise en température, **caractérisé en ce qu'**on mesure la courbure du ou des arbres (2, 3), et on ajuste en fonction de la courbure la température d'entrée du fluide de mise en température.

2. Procédé selon la revendication 1, **caractérisé en ce que** le ou les arbres (2, 3) sont traversés par un fluide de mise en température.

3. Procédé selon la revendication 1 ou 2, **caractérisé en ce que** l'enveloppe (6) est conçue comme une double enveloppe, la double enveloppe formant une fente (7) par laquelle s'écoule le fluide de mise en température.

4. Procédé selon l'une des revendications 1 à 3, **caractérisé en ce qu'**on élève la température d'entrée du fluide de mise en température dans le cas dans lequel la courbure mesurée du ou des arbres (2, 3) est supérieure à une valeur limite supérieure prédéfinie.

5. Procédé selon l'une des revendications 1 à 4, **caractérisé en ce qu'**on abaisse la température d'entrée du fluide de mise en température dans le cas dans lequel la courbure mesurée du ou des arbres (2, 3) est inférieure à une valeur limite inférieure et/ou si la qualité du produit prélevé diminue.

6. Procédé selon l'une des revendications 1 à 5, **caractérisé en ce que** le fluide de mise en température traverse le ou les arbres (2, 3) et/ou la double enveloppe à co-courant ou à contre-courant par rapport au contenu du malaxeur-mélangeur (1).

7. Procédé selon l'une des revendications 1 à 6, **caractérisé en ce que** le fluide de mise en température est l'eau, la vapeur d'eau, une huile thermique ou un sel fondu.

8. Procédé selon l'une des revendications 1 à 7, **caractérisé en ce que** la température d'entrée du fluide de mise en température est comprise entre 20°C et 99°C.

9. Procédé selon l'une des revendications 1 à 8, **caractérisé en ce que** la température maximale du fluide de mise en température est inférieure à la décomposition des matériaux contenus dans le malaxeurmélangeur (1) et/ou à la température d'ébullition du mélange contenu dans le malaxeur-mélangeur.

10. Procédé selon l'une des revendications 1 à 9, **caractérisé en ce que** la température de sortie du fluide de mise en température est comprise entre 20°C et 120°C.

11. Procédé selon l'une des revendications 1 à 10, **caractérisé en ce qu'**au moins un arbre (2, 3) et/ou l'enveloppe (6) sont préchauffés avant introduction des produits de départ.

12. Procédé selon l'une des revendications 1 à 11, **caractérisé en ce que** la température des produits de départ avant leur entrée dans le malaxeur-mélangeur (1) est comprise entre 5°C et 30°C.

13. Procédé selon l'une des revendications 1 à 12, **caractérisé en ce qu'**on introduit en tant que produit de départ un monomère soluble dans l'eau à insaturation monoéthylénique, en particulier l'acide acrylique ou l'acide méthacrylique.

14. Procédé selon la revendication 13, **caractérisé en ce qu'**on introduit en tant que produit de départ supplémentaire un agent de réticulation contenant au moins deux doubles liaisons à insaturation éthylénique.

15. Procédé selon la revendication 13 ou 14, **caractérisé en ce qu'**on introduit en tant que produit de départ un monomère insoluble dans l'eau à insaturation monoéthylénique, en particulier de l'acrylate d'hydroxyéthyle, de l'acrylate d'hydroxypropyle, du méthacrylate d'hydroxyéthyle, du méthacrylate d'hydroxypropyle, de l'acrylonitrile et/ou du méthacrylonitrile.

16. Procédé selon l'une des revendications 13 à 15, **caractérisé en ce qu'**on introduit en tant que produit de départ supplémentaire un amorceur de polymérisation, en particulier un système rédox constitué de peroxyde d'hydrogène, de peroxodisulfate de sodium et d'acide ascorbique.
